# EUROPEAN PATENT SPECIFICATION

(11) **EP 3 104 433 B1**
(45) Date of publication and mention of the grant of the patent: **02.10.2019**
(21) Application number: 15171834.3
(22) Date of filing: 12.06.2015
(51) Int. Cl.: H01M 4/06, H01M 4/583, H01M 4/66, H01M 6/04, H01M 6/18, H01M 6/24, H01M 6/40, H01M 14/00, H01M 4/08, H01M 4/86, H01M 4/90, H01M 4/58, H01M 4/60, H01M 6/26, H01M 12/00, H01M 4/02

(54) **PROTON BATTERY BASED ON TWO-DIMENSIONAL MATERIALS**
PROTONENBATTERIE AUF BASIS VON ZWEIDIMENSIONALEN MATERIALIEN
BATTERIE DE PROTONS À BASE DE MATÉRIAUX BIDIMENSIONNELS

(43) Date of publication of application: 14.12.2016
(73) Proprietor: Nokia Technologies Oy, 02610 Espoo (FI)
(72) Inventor: WEI, Di, Cambridge, CB4 3TD (GB); BORINI, Stefano, Cambridge, CB3 0JE (GB)
(74) Representative: Swindell & Pearson Limited

(56) References cited:
- WO-A1-2014/009721
- CN-A- 103 358 612
- CN-A- 104 064 363
- US-A1- 2014 349 211
- HIROYOSHI KITABAYASHI ET AL: "Systematic approach for the electrification suppression using the effective work function", 29TH ELECTRICAL OVERSTRESS/ELECTROSTATIC DISCHARGE SYMPOSIUM (EOS/ESD) , 2007. EOS/ESD, IEEE, PI, 1 September 2007 (2007-09-01), pages 3B.2-1, XP031189818, ISBN: 978-1-58537-136-5
- "Electron Work Function of the Elements", CRC Handbook of Chemistry and Physics, 96th edition, 9 June 2015 (2015-06-09), pages 12-124, XP055225714, Retrieved from the Internet: URL:http://www.hbcpnetbase.com//articles/1 2_21_86.pdf [retrieved on 2015-11-04]

## Description

### BACKGROUND

### Technical Field

The exemplary and non-limiting embodiments described herein relate generally to energy storage devices and, more particularly, to batteries that generate protons using graphene, graphene derivatives, or other two-dimensional materials.

### Brief Description of Prior Developments

Energy sources and energy storage devices (e.g., lithium ion batteries) are generally three-dimensional and not typically realizable in two-dimensional architectures on substrates. Such sources and devices are accordingly not suited for use with printing technologies and generally cannot be printed onto substrates for use in electronic devices. US 2014/349211 discloses an apparatus comprising: an anode formed of graphene oxide from an acidic pH; a cathode from a pH greater than the acidic pH of the anode; and charge collectors deposited on the anode and the cathode. WO 2014/009721 discloses an ion-conducting membrane comprising: a first ion-conducting layer comprising one or more first ion-conducting polymers; and a barrier layer comprising graphene-based platelets. CN 103358612 discloses a methanol rejective membrane for a direct methanol fuel cell the methanol rejective membrane is formed by a Nafion membrane in a composite layer. CN 104064363 discloses a 3-D petal-shaped graphene-polyanalene super-capacitor electrode material.

### SUMMARY

The following summary is merely intended to be exemplary of embodiments of the disclosure. The summary is not intended to limit the scope of the claims. The invention is as defined in independent claim 1.

In accordance with one aspect, an apparatus comprises a first layer comprising a first electron conductive material; a second layer comprising a second electron conductive material; and a third layer comprising a proton conductive material disposed between the first layer and the second layer. The first layer, the second layer, and the third layer each comprise at least one sub-layer of a printable material comprising a two-dimensional or substantially two-dimensional material.

In accordance with another aspect, a printable battery comprises a first layer comprising a printed film of a first material; a second layer comprising a printed film of graphene oxide; and a third layer disposed between the first layer and the second layer, the third layer comprising a printed film of graphene oxide and a proton conductive material.

In accordance with another aspect, a method comprises dissociating hydrogen from functional groups of a substantially two-dimensional first layer to form protons; causing the protons to diffuse from the substantially two-dimensional first layer to a substantially two-dimensional second layer; and determining a value representing a voltage based on the diffusion of the protons to the substantially two-dimensional second layer.

### BRIEF DESCRIPTION OF THE DRAWINGS

The foregoing aspects and other features are explained in the following description, taken in connection with the accompanying drawings, wherein:
Figure 1 is a schematic representation of one exemplary embodiment of a proton battery;
Figure 2 is a chemical structure representation of a proton conductive material comprising a sulfonated tetrafluoroethylene-based fluoropolymer-copolymer for use in the proton battery of Figure 1;
Figure 3A is a chemical structure representation of a proton conductive material based on a triazine group and amine groups for use in the proton battery of Figure 1;
Figure 3B is a chemical structure representation of a proton conductive material based on a carbon ring with carboxyl groups for use in the proton battery of Figure 1;
Figure 4 is a representation of a chemical reaction resulting in a metal coordination complex based on copper and dipicolinic acid for use in the proton battery of Figure 1;
Figure 5 illustrates chemical structure representations of various metal coordination complexes based on imidazolidine for use in the proton battery of Figure 1;
Figure 6 illustrates chemical structure representations of various metal coordination complexes based on 2,3,5,6-tetrakis(a-pyridyl)pyrazine for use in the proton battery of Figure 1;
Figure 7 is a graphical representation of an FTIR spectroscopy analysis of GO, rGO, and GO-Nafion®;
Figures 8A and 8B are graphical representations of a C1s XPS spectrum of GO indicating oxidation with regard to components that correspond to carbon atoms in different functional groups;
Figure 9 is a graphical representation of a comparison of a traditional proton battery comprising Ag/GO-Nafion®/rGO/Ag and a Ag/PEDOT/GO-Nafion®/rGO/Ag battery;
Figure 10 is a graphical representation of a comparison of the traditional proton battery comprising Ag/GO-Nafion®/rGO/Ag and a Graphite/GO-Nafion®/rGO/Ag battery;
Figure 11 is an illustration of a Au/GO-Nafion®/Al structure having two dissimilar electrodes with different work functions providing a voltage;
Figure 12 is a graphical representation of a comparison of a proton electrolyte as bare Nafion® with a GO-Nafion® mixture to illustrate performance; and
Figure 13 is a flowchart of one exemplary method of using the proton battery of Figure 1.

### DETAILED DESCRIPTION OF EMBODIMENT

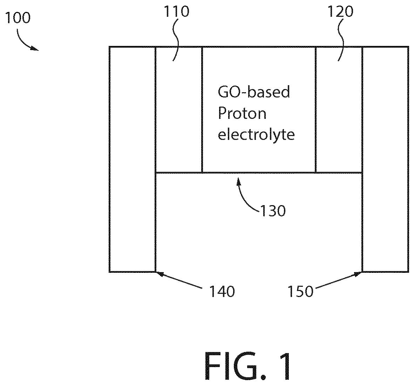

Referring to Fig. 1, a schematic representation of one exemplary embodiment of a proton battery is designated generally by the reference number 100 and is hereinafter referred to as "battery 100." Battery 100 operates via a dynamic generation of protons in the presence of water, in conjunction with a pH gradient, to allow the battery 100 to regenerate charge through continuous chemical reactions, thereby resulting in an energy-autonomous device. Although the features will be described with reference to the exemplary embodiments shown in the drawings, it should be understood that features can be embodied in many alternate forms. In addition, any suitable size, shape, or type of elements or materials could be used.

Battery 100 is a graphene-based energy source and storage device that comprises a cathode 110 (e.g., a first layer) and an anode 120 (e.g., a second layer) connected via an electrolyte 130 (e.g., a third layer). Several arrangements of the cathode 110, anode 120, and electrolyte 130 may be combined to define cells in parallel and/or series configurations. A cathode-side charge collector 140 may be disposed on the cathode 110, and an anode-side charge collector 150 may be disposed on the anode 120. The charge collectors 140, 150 may comprise printed Ag lines. In the presence of water molecules, the battery 100 can provide an open circuit voltage and a short circuit current which can depend on the presence of water.

In any embodiment of the battery 100, materials comprising the cathode 110, the anode 120, and the electrolyte 130 may be two-dimensional (2D) materials (or sufficiently thin to be considered substantially 2D) or layered materials (e.g., layered 2D materials). The materials of the cathode 110 and the anode 120 are electron conductive materials, and the material of the electrolyte is a proton conductive material, which may be located between the cathode 110 and the anode 120 as shown. The use of 2D materials and/or layered materials as the cathode 110 and the anode 120 in combination with the use of a 2D material as the electrolyte 130 may provide advantages, as compared to typical batteries, in terms of printability as well as in terms of higher realized energy capacity due to large surface areas and capacitance at the interfaces of the electrolyte 130 with the cathode 110 and the anode 120 and/or due to supercapacitive behavior of junctions of the electrolyte 130 at the cathode 110 and the anode 120.

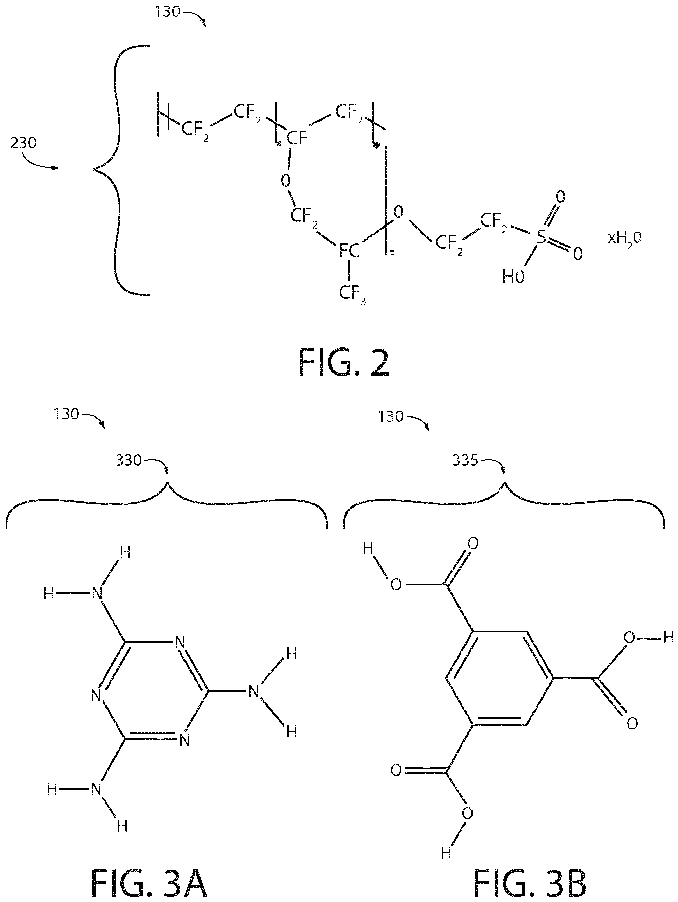

With regard to the electrolyte 130, which is defined by the independent claim 1, the material thereof may be a solid state 2D (or substantially 2D) proton conductive material such as graphene oxide (GO) combined with sulfonated tetrafluoroethylene-based fluoropolymer-copolymer (e.g., Nafion®, which is available from DuPont, Wilmington, Delaware, USA), or derivatives of such a copolymer. The combination of the GO and the sulfonated tetrafluoroethylene-based fluoropolymer-copolymer may be deposited as a film by printing from a solution of GO and the fluoropolymer-copolymer. A sulfonated tetrafluoroethylene-based fluoropolymer-copolymer 230 (hereinafter "Nafion®") is shown in Figure 2.

However, material of which the electrolyte 130 may be comprised is not so limited, as proton conductive materials comprising pyridine or pyridine-related structures may be used. For example, a proton conductive material 330 for use in the battery 100 may be based on 1,3,5-triazine and may be aminated, as shown in Figure 3A. Also, a proton conductive material 335 for use in the battery 100 may be based on a composition having a carbon ring with carboxyl groups, as shown in Figure 3B.

Referring back to Figure 1, the cathode 110 comprises a printed film of a first material and may comprise a material such as a noble metal (e.g., Au, Pt, Pd, Ag, Rh), graphite, poly(3,4-ethylenedioxythiophene) (PEDOT), 2D metal dichalcogenides (e.g., PtSe₂), or combinations of the foregoing materials. In some embodiments, the material of the cathode 110 may comprise a film of graphene flakes deposited (e.g., by printing, drop cast, spraying, or similar technique) from a solution of graphene. The work function of any material selected as the cathode 110 is generally higher than the work function of any material selected as the anode 120. For example, Au has a work function of about 5.1-5.7 electron volts (eV), Pt has a work function of about 6 eV, Pd has a work function of about 5.2-5.6 eV, graphite has a work function of about 5 eV, and PEDOT has a work function of about 5.2 eV.

In exemplary embodiments in which the cathode 110 comprises a PtSe₂ metal dichalcogenide, a PtSe₂/graphene nanocomposite can be fabricated by facial ultrasonic assisted techniques such as a modified Hummers' method.

In some exemplary embodiments, the cathode 110 may comprise a noble metal (e.g., Pt) grafted with GO. Noble metals can be functionalized on GO by chemical reactions such as through diazonium chemical reactions, ring-opening reactions, or metal coordination reactions.

In some exemplary embodiments, the cathode 110 may comprise materials from the formation of metal coordination complexes between metal ions such as Cu²⁺, Pd²⁺, and Pt²⁺ with imidazolidines, pyrazines, pyridines, and other different ligands. The formation of such complexes results in the preparation of finite 2D and 3D (three-dimensional) structures as well as infinite polymers and frameworks.

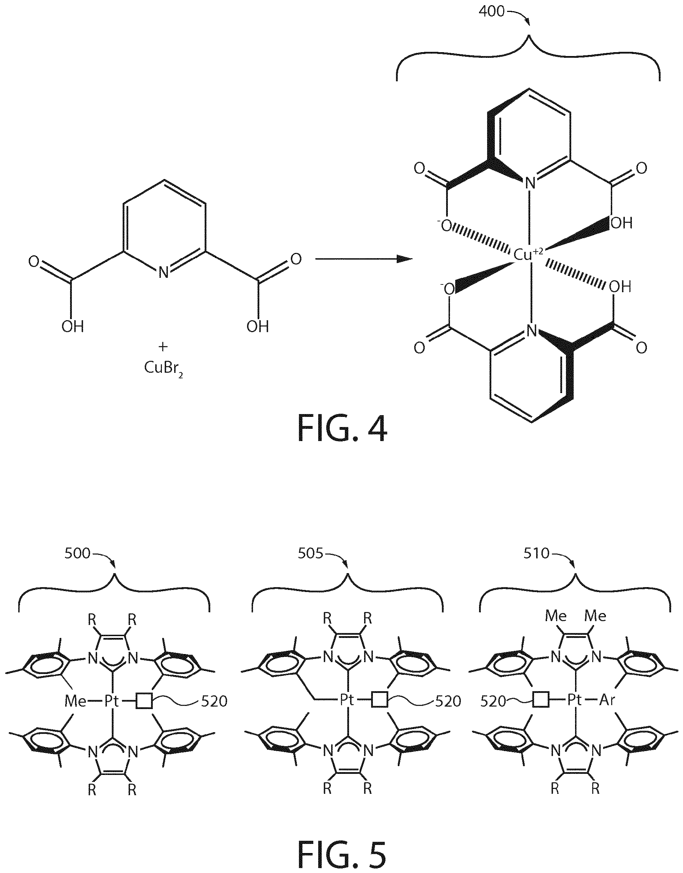

Referring to Figure 4, one exemplary embodiment of a metal coordination complex 400 for use in the cathode 110 may be formed by the reaction of CuBr₂ with dipicolinic acid (pyridine-2,6-dicarboxylic acid). In other exemplary embodiments, other carboxylic or dicarboxylic acids may be used.

Referring to Figure 5, various metal coordination complexes 500, 505, and 510 for use as the cathode 110 may be formed as Pt/imidazolidine complexes. Methyl groups may be substituted onto the imidazolidine ring and/or onto the Pt, as shown at 520. Aryl groups may be substituted onto the Pt, as in complex 510. Rings containing fluorine (C₆F₅, C₆HF₄) may be substituted onto the Pt.

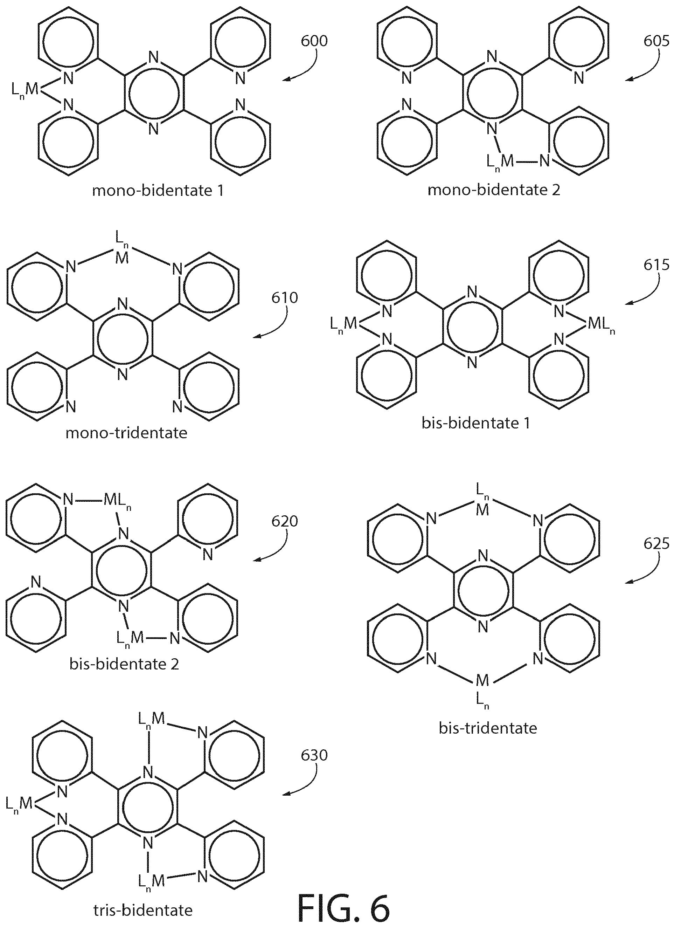

Various metal coordination complexes for use as the cathode 110 may be based on a pyrazine molecule and may contain functional groups such as pyridines. For example, metal coordination complexes for use as the cathode 110 may be built on tetra-2-pyridinylpyrazine molecules. More specifically, as shown in Figure 6, various metal coordination complexes 600, 605, 610, 615, 620, 625, and 630 may be based on 2,3,5,6-tetrakis(a-pyridyl)pyrazine (e.g., a pyrazine molecule containing pyridine ligands). The pyridine or pyridine-containing ligands can be attached to GO by employing a Pt²⁺/Pd²⁺ compound. For example, the GO may attach at the ligand sites Lₙ in the metal coordination complexes 600, 605, 610, 615, 620, 625, and 630, with M denoting the platinum or palladium.

Other metal coordination complexes for use as the cathode 110 may be benzonitrile-based or 4-ethynylpyridine-based. Such complexes may, for example, be formed by the interaction of cis-Ptdppp (p-C₆H₄CN)₂ or cis-Ptdppp (p-C₂C₆H₄N)₂ with cis-ML₂ (OSO₂CF₃)₂ in CH₂Cl₂ or acetone, at room temperature. In such embodiments, the metal may be Pt or Pd, and the ligands may be either PEt₃ (acyclic phosphorous) or dppp (1,3-bis(diphenylphosphino)propane). This results in mixed, neutral-charged cyclic tetranuclear Pt-Pt or Pt-Pd macrocyclic complexes in 90-99% yields via self-assembly. The tetramers are microcrystalline solids stable in air and water and have decomposition points greater than about 170 degrees C. These complexes, before precipitation from the solution, can be further treated by chemical or electrochemical methods to reduce the Pd²⁺/Pt²⁺ to Pd/Pt metals to be grafted on GO electrodes.

Referring back to Figure 1, the anode 120 comprises a printed film of graphene oxide and may comprise reduced GO (rGO), Al foil having a work function lower than the work function of material(s) used in the cathode 110 and combinations of the foregoing materials. In some embodiments, the material of the anode 120 may be a film of rGO deposited (e.g., by printing, drop cast, spraying, or similar technique) from a solution of rGO. In any embodiment, the material of the anode 120 has a lower work function than the material of the cathode 110. Also, in any embodiment incorporating rGO as a material of the anode 120, the modified Hummers' method may be used to produce a modified graphene ink based on the chemical reduction of exfoliated GO. In some embodiments using the modified Hummers' method, potassium hydroxide (KOH) may be used for re-graphitization of the GO, with hydrazine being added as a reducing agent, to produce a homogenous dispersion of black graphene nanosheets having long-term stability. The anode 120 may comprise the lower work function rGO mixed with a base such as KOH, NaOH or combinations of the foregoing.

Depending on the preparation method, GO with chemical compositions ranging from C₈O₂H₃ to C₈O₄H₅, corresponding to a C/O ratio of 4:1-2:1, is typically produced. After reduction, the C/O ratio can be improved to approximately 12:1 in most cases, but values as large as 246:1 may also be obtained. The C/O ratio is usually determined through elemental analysis measurements by combustion, and also by X-ray photoelectron spectrometry (XPS) analysis. Data obtained by elemental analysis are reasonably consistent with data by XPS, considering the fact that elemental analysis gives the bulk composition while XPS is a surface analysis technique. Furthermore, XPS spectra can give more information on the chemical structures of GO and rGO. Since it is p-electrons from the sp2 carbon that largely determine the optical and electrical properties of carbon-based materials, the fraction of sp2 bonding can provide insight into structure-property relationships.

The anode 120 may also comprise other low work function 2D materials such as WS₂, MoS₂, other transition metal dichalcogenides and combinations of the foregoing materials. The isolation of transition metal dichalcogenides having several layers may also be performed by mechanical and chemical exfoliation with very low yields. One exemplary efficient route to transfer synthesized WS₂ films onto different substrates such as quartz and transmission electron microscopy (TEM) grids may be performed using concentrated hydrofluoric acid.

Transition metal dichalcogenides can also be made by chemical reaction of a metal oxide with H₂S and H₂:

MO₃ + 2H₂S + H₂ → MS₂ + 3H₂O (M = Mo, W)

In such a reaction, hydrides decompose and begin to release hydrogen at relatively low temperatures (e.g., about -150 degrees C for LiAlH₄ and about 300 degrees C for NaBH₄). When the temperature is increased, sulfur volatilizes at -400 degrees C and reacts with the hydrogen to form H₂S in situ. At this stage, the metal oxide particles are already partially reduced by the hydrogen present in excess and readily react with the hydrogen sulfide. The overall reaction is characterized by:

2MO₃ + 3NaBH₄ + 4S → 2MS₂ + 3NaBO₂ + 6H₂ (M = Mo, W)

The Na can be exchanged by Li, and B can be exchanged by Al.

The cathode 110 and the anode 120 may be made of other 2D materials or layered materials with different work functions. The cathode 110 and the anode 120 may then be connected to the charge collectors 140 and 150, respectively. Exemplary methods of fabricating the materials for the cathode 110 and the anode 120 are described in the following non-limiting Examples.

### Example 1 - Preparation of 2D metal chalcogenide/graphene nanocomposite

Graphene oxide was prepared using a Hummers'-Offeman method. Hydrogen hexachloroplatinate (IV) hydrate (H₂PtCl₆ •*n*H₂O, *n* = 5.5) was used as a platinum source. Selenium powder (Se), Rhodamine B, and methylene blue were used as model pollutant.

For the synthesis of the PtSe₂ precursor, 2 g of anhydrous sodium sulfite (Na₂SO₃) and 0.2 g of crude Se were vigorously stirred in 100 mL of distilled water for 30 minutes to ensure homogenous mixing, followed by addition of hydrogen hexachloroplatinate suspension in 20 mL of water. The resulting reaction mixture was then ultrasonicated for 90 minutes at 35 degrees C and allowed to cool at room temperature. The PtSe₂-obtained precipitates were filtered. The residue was washed several times with distilled water and dried in a vacuum oven at 90 degrees C for 8 hours.

Synthesis of the PtSe₂/graphene nanocomposites was carried out using an ultrasonication method. In this process, 1 g of GO was mixed with the previously obtained PtSe₂ (0.1 mol) in 200 mL of distilled water. The suspension was ultrasonicated for 3 hours at 35 degrees C and cooled at room temperature. The resultant solution was filtered and washed 3 times with distilled water and transferred into a dry oven for 6 hours at 90 degrees C. The powder was then heat treated at 500 degrees C for 1 hour in an electric furnace to obtain the PtSe₂/graphene nanocomposites. The obtained samples with different molar ratios were labeled as 1PtSe₂/graphene and 2PtSe₂/graphene, respectively.

The crystal structures and phases of the samples were obtained by X-ray diffraction (XRD) (Shimata XD-D1, Japan) with Cu Kα radiation (λ = 1.54056 angstroms) in the range of 2θ from 10 degrees to 80 degrees at a scan speed of 1.2 degrees per meter. The morphology of the samples was studied by scanning electron microscopy (SEM) (JSM-5200, available from JEOL, Japan). Energy dispersive X-ray spectroscopy (EDX) was also employed for elemental analysis. Transmission electron microscopy (TEM) (JEM-2010, available from JEOL, Japan) was used to observe the surface state and structure of the photocatalyst composites at an acceleration voltage of 200 kV; TEM was also used to examine the size and distribution of the PtSe₂ nanoparticles on graphene sheet. Diffuse reflectance spectra were obtained by using a scan UV-Vis spectrophotometer (Neosys-2000, available from Scinco, Korea) equipped with an integrating sphere assembly. Raman spectra of the samples were observed using a spectrometer (NRS-3100, available from Jasco Inc., Maryland, USA) having an excitation laser wavelength of 532.06 nm. The decomposition kinetics for the photocatalytic activity was measured by using a spectrometer (Optizen POP, available from Mecasys, Korea).

Other platinum dichalcogenides (including PtS₂, PtSe₂, and PtTe₂) were made using similar methods.

### Example 2 - Preparation of GO

Graphene oxide was also prepared by oxidizing natural graphite powder (SP, 320 mesh) based on a modified Hummers' method. As-prepared GO was suspended in ultra-pure water to give a brown dispersion, which was subjected to dialysis over a 4 day period to completely remove residual salts and acids. The resulting purified GO powder was collected by centrifugation and then air-dried. The GO powder was dispersed in water to create a 0.05 wt.% dispersion. The dispersion was subsequently exfoliated through ultrasonication for 1 hour, during which process the bulk GO powder was transformed into GO nanoplatelets.

### Example 3 - KOH-treated GO (rGO)

Graphene oxide was synthesized from natural graphite powder (SP, 320 mesh) by a modified Hummers' method. As-prepared GO was purified via dialysis for 4 days. In a procedure for chemical re-graphitization by KOH, 10 mL of the aqueous GO dispersion (0.5 mg/mL) was mixed with 10 mg KOH (82%) in a 50 mL flask, and the homogenous and yellow suspension was obtained. After an ultrasonication for a few minutes, the yellow suspension changed to be the homogenous and yellow-black dispersion. The flask was then put in an oil bath (at about 80 degrees C) for 24 hours. During refluxing, the yellow-black suspension became black when adding reducing agent of hydrazine solution in water (50%). Homogeneous long-term stable black graphene nanosheets dispersion was obtained after 24 hours.

### Example 4 - Fourier transform infrared (FTIR) spectroscopy of GO, rGO, and GO-Nafion®

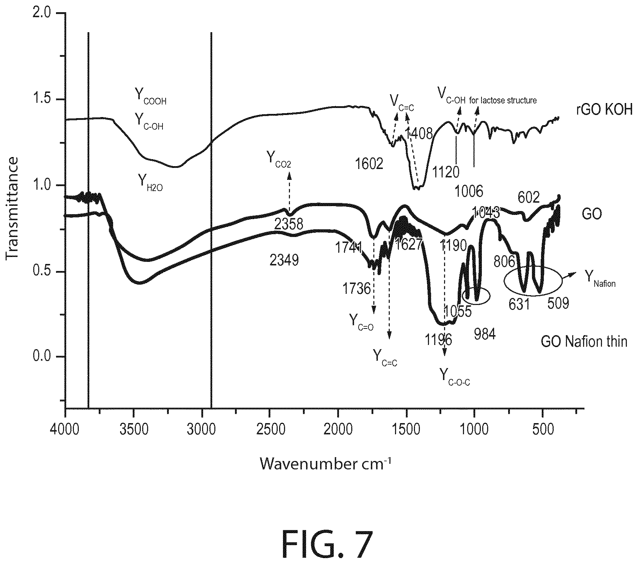

Referring now to Figure 7, FTIR spectroscopy showed a very broad feature between about 2500 and 3750 cm⁻¹ corresponding to C-OH (C-OH for phenols and lactols at about 3000-3600 and about 1050-1150 cm⁻¹), COOH (about 1650-1750, about 3000-3600, and about 1050-1200 cm⁻¹) and H₂O stretches. The band at 3085 cm⁻¹ was assigned to aromatic C-H stretching vibration. The stretching mode of the O-H band appeared at 3382 cm⁻¹. The spectrum also showed several absorption bands in the region between 2000 and 800 cm⁻¹, which had been previously assigned to epoxides, alcohols, carbonyls, ketones, and sp2 carbon.

The IR spectra of GO had intense bands at about 1740 cm⁻¹ that were assigned to the carbonyl (C=O) stretching mode, and the band at 1190 cm⁻¹ was due to the C-O-C stretch of the epoxide groups. The phenolic groups ionized to give the phenolate anion (C-O⁻) that subsequently transformed to the ketone with a characteristic symmetric stretching mode at 1627 cm⁻¹. In addition to the GO peaks, GO Nafion® film also had fingerprints from Nafion® polymer and bands at 2350 cm⁻¹ from CO₂.

With a further increase in pH, the band at 1740 cm⁻¹ decreased in intensity and was absent at pH 13. The carbonyl (C=O) stretching mode of the undissociated carboxylic (COO) group at 1740 cm⁻¹ in rGO disappeared. The IR spectra of rGO were dominated by the C=C stretching modes at 1602 and 1408 cm⁻¹ of the aromatic segments of the sp2 network. In contrast to GO, the intensities of the oxygen functionalities were significantly weaker, or absent in rGO. This was in accordance with reports on alkaline treatment of GO removing a majority of the oxidized groups. This also indicated that epoxy groups had been washed away by alkaline substances (e.g., KOH). High content of carboxyls was also not supported by spectroscopy data such as NMR, XPS, etc. The carboxyl band at about 1740 cm⁻¹ was considerably weaker, whereas the sp2-C mode at about 1600 cm⁻¹ was stronger. This spectra information suggested an increase of sp2 conjugation domain density (sp2-hybridized C=C in plane vibration at about 1600 cm⁻¹) in the carbon backbone following base treatment. Both aromatic C-H stretching and sp2 C=C stretching were enhanced in rGO.

### Example 5 - C1s XPS spectra of GO and rGO

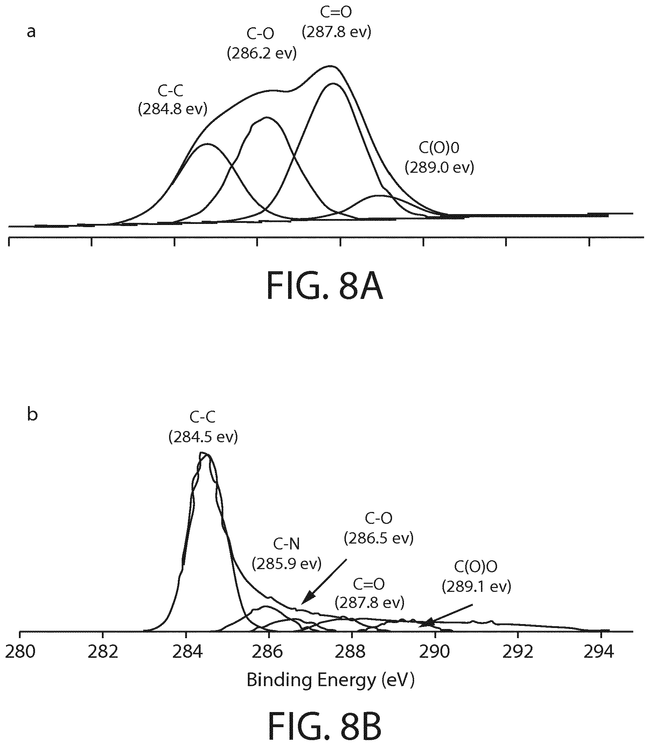

Referring now to Figures 8A and 8B, the C1s XPS spectrum of GO clearly indicated a considerable degree of oxidation with four components that corresponded to carbon atoms in different functional groups: the non-oxygenated ring C (284.6 eV), the C in C-O bonds (286.0 eV), the carbonyl C (287.8 eV), and the carboxylate carbon (O-C=O, 289.0 eV). Although the C1s XPS spectrum of rGO also exhibited these oxygen functional groups, their peak intensities were much weaker than those in GO. The Table below summarizes the electrical conductivity and C/O ratio of typical reports on the reduction of GO.

**Table - Comparison of the reducing effect of GO by different methods**

| Reduction Method | Form | C/O Ratio | σ (S/cm) |
|---|---|---|---|
| Hydrazine hydrate | Powder | 10.3 | 2 |
| Hydrazine reduction in colloid state | Film | Not available (N/A) | 72 |
| 150 mM NaBH₄ solution, 2 hours (h) | TCF | 8.6 | 0.045 |
| Hydrazine vapor | Film | ∼8.8 | NA |
| Thermal annealing at 900 degrees C, ultra-high vacuum (UHV) | | ∼14.1 | NA |
| Thermal annealing at 1100 degrees C, UHV | TCF | NA | ∼10³ |
| Thermal annealing at 1100 degrees C in Ar/H₂ | TCF | NA | 727 |
| Multi-step treatment | Powder | | |
| (I) NaBH₄ solution | | 4.78 | 0.823 |
| (II) Concentrated H₂SO₄ 180 degrees C, 12 h | | 8.57 | 16.6 |
| (III) Thermal annealing at 1100 degrees C in Ar/H₂ | | >246 | 202 |
| Vitamin C | Film | 12.5 | 77 |
| Hydrazine monohydrate | | 12.5 | 99.6 |
| Pyrogallol | | NA | 14.8 |
| KOH | | NA | 1 . 9x10⁻³ |
| 55% HI reduction | | >14.9 | 298 |

As shown in the Table, rGO can be made by KOH, chemical reduction reactions (hydrazine), thermal annealing, and UV/Xenon flash reductions. The Table is a summary of electrical conductivity and C/O ratios of reports on the reduction of GO.

### Example 6 - Comparison of batteries

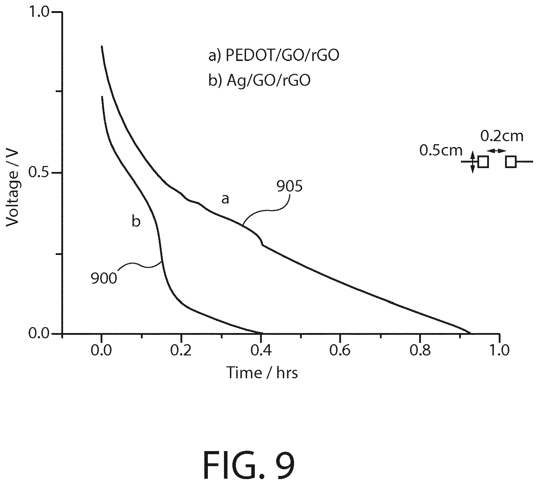

Referring now to Figure 9, a comparison was made of a traditional proton battery Ag/GO-Nafion®/rGO/Ag (shown at 900) and a Ag/PEDOT/GO-Nafion®/rGO/Ag battery (shown at 905). Both the energy capacity and open circuit voltage were increased. The work function of PEDOT was about 5.1 eV, which was higher than GO(4.8 eV) and rGO (4.2 eV).

### Example 7 - Second comparison of batteries

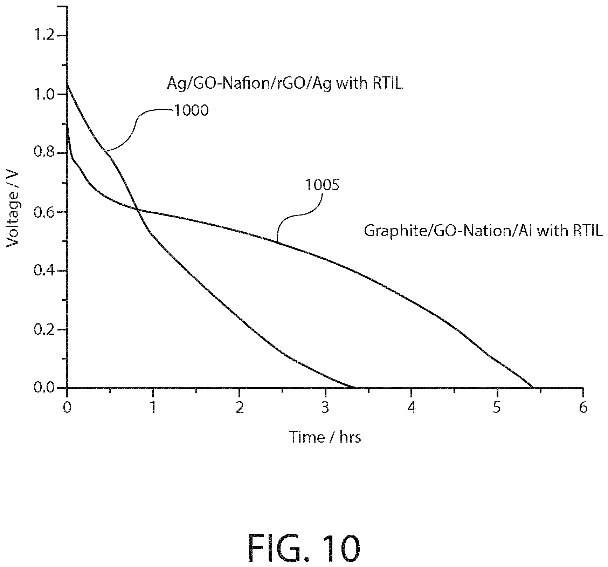

Referring now to Figure 10, a comparison was made of the traditional proton battery Ag/GO-Nafion®/rGO/Ag in a room temperature ionic liquid (shown at 1000) and a Graphite/GO-Nafion®/rGO/Ag battery in a room temperature ionic liquid (shown at 1005). The energy capacity was also increased. The work function of graphite was about 5 eV, which was also higher than GO (4.8 eV) and rGO (4.2 eV).

Since graphite has a higher work function than Al and also has a high surface area, a new series of the cells was assembled with a structure of Graphite/GO-Nafion®/Al. It can be seen from the above results that Graphite/GO-Nafion®/Al may store even higher energy than the "traditional" proton batteries. This may be due to the higher surface area of graphite.

Therefore, to maximize the energy capacity of proton batteries, it is potentially feasible to build up a cell with Graphite/GO-Nafion®/rGO, which was made from pure carbon as well. Such a structure may be generalized as shown in Figure 1.

### Example 8 - Voltage test of proton battery

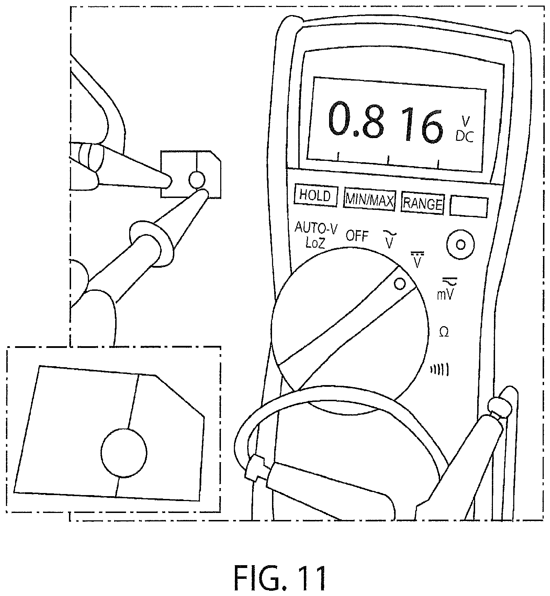

Referring now to Figure 11, the combination was also made by increasing the work function of the cathode and lowering the work function of the anode. The work function of Au is 5.1 eV and Al is 4.2 eV, which is similar to rGO. In the illustration of Figure 11 (Au/GO-Nafion®/Al structure), it was shown that a structure with two dissimilar electrodes with different work functions can provide a voltage. Additionally, 2D materials such as WS₂ (2 eV) may be more suitable as the anode in proton batteries.

### Example 9 - Comparison of proton electrolyte, bare Nafion®, and GO-Nafion®mixture

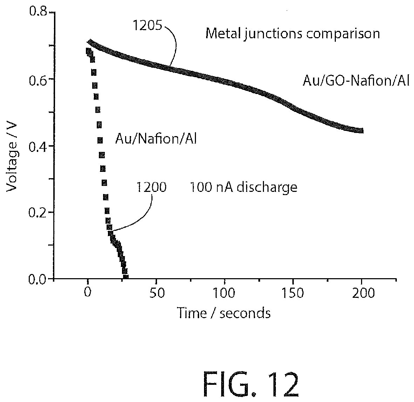

Referring now to Figure 12, a comparison of the proton electrolyte as bare Nafion® (shown at 1200) and the proton electrolyte as GO-Nafion® mixture (shown at 1205) was made. The GO-Nafion® combination demonstrated better performance than either Nafion® or GO alone in terms of energy capacity created in the junction. Thus, the GO-Nafion® combination provided much higher energy capacity than did bare Nafion®.

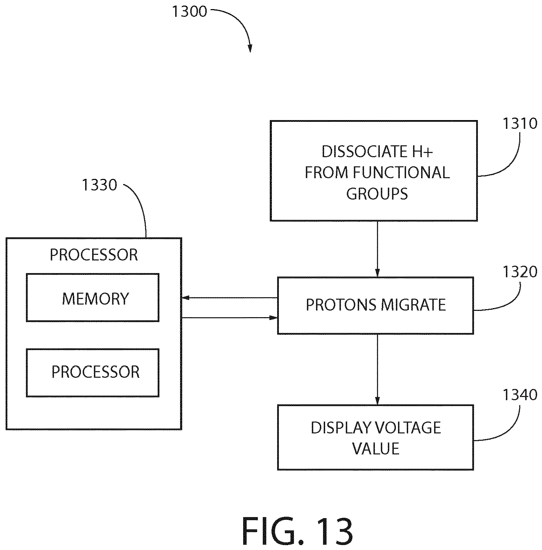

Referring now to Figure 13, one exemplary method of using the battery 100 is designated generally by the reference number 1300 and is hereinafter referred to as "method 1300." In the method 1300, hydrogen ions or protons are liberated from the material of the 2D electrolyte 130 in the presence of water in a dissociation step 1310. In a diffusion step 1320, the protons then migrate through the electrolyte 130 as a result of a pH gradient. From the diffusion step 1320, an analysis step 1330 is carried out in which a voltage across a junction defined by an interface between the electrolyte 130 and the cathode 110 is measured. The analysis step 1330 is carried out by a controller having a memory and a processor. The controller may be used to convert the voltage into a readable value for display. In a display step 1340, the value representing the voltage is then determined and displayed. Migration of the protons may also be carried out back to the GO of the electrolyte 130 upon the application of moisture and the removal of any current draw on the battery 100.

In the exemplary embodiments described herein, an apparatus comprises a first layer comprising a first electron conductive material; a second layer comprising a second electron conductive material; and a third layer comprising a proton conductive material disposed between the first layer and the second layer. The first layer, the second layer, and the third layer each comprise at least one sub-layer of a printable material comprising a two-dimensional or substantially two-dimensional material. The third layer may comprise graphene oxide and a copolymer comprising at least one sulfonium group. The third layer may comprise graphene oxide and one or more of an azine group and an amine group. The third layer may comprise graphene oxide and a carbon ring with carboxyl groups. The first layer may comprise a noble metal, graphite, poly(3,4-ethylenedioxythiophene), a two-dimensional metal dichalcogenide, graphene flakes, a metal coordination complex, or combinations of the foregoing materials. The second layer may comprise graphene oxide or reduced graphene oxide. A work function of material of the second layer may be less than a work function of material of the first layer. A charge storage means may comprise the apparatus.

Also in the exemplary embodiments described herein, a printable battery comprises a first layer comprising a printed film of a first material; a second layer comprising a printed film of graphene oxide; and a third layer disposed between the first layer and the second layer, the third layer comprising a printed film of graphene oxide and a proton conductive material. The proton conductive material of the third layer may comprise sulfonated tetrafluoroethylene-based fluoropolymer-copolymer. The proton conductive material of the third layer may comprise aminated 1,3,5-triazine. The proton conductive material may comprise a composition based on a carbon ring with carboxyl groups. The first material may comprise a noble metal selected from the group consisting of Au, Pt, and Pd, graphite, poly(3,4-ethylenedioxythiophene), a two-dimensional metal dichalcogenide, graphene flakes, a metal coordination complex, or combinations of the foregoing materials. The two-dimensional metal dichalcogenide may comprise PtSe₂ or PtSe₂/graphene nanocomposite. The metal coordination complex may comprise one or more metal ions selected from Cu²⁺, Pd²⁺, and Pt²⁺ combined with one or more of an imidazolidine, a pyrazine, and a pyridine. The metal coordination complex may be formed from CuBr₂ with dipicolinic acid. The metal coordination complex may be a Pt/imidazolidine complex. The metal coordination complex may be based on a pyrazine and may contain pyridine ligands. The metal coordination complex may be benzonitrile-based or 4-ethynylpyridine-based. The second layer may be reduced graphene oxide. The second layer may comprise a transition metal dichalcogenide.

In the exemplary embodiments described herein, a method comprises dissociating hydrogen from functional groups of a substantially two-dimensional first layer to form protons; causing the protons to diffuse from the substantially two-dimensional first layer to a substantially two-dimensional second layer; and determining a value representing a voltage based on the diffusion of the protons to the substantially two-dimensional second layer.

The word "exemplary" is used herein to mean "serving as an example, instance, or illustration." Any embodiment described herein as "exemplary" is not necessarily to be construed as preferred or advantageous over other embodiments. All of the embodiments described in this Detailed Description are exemplary embodiments provided to enable persons skilled in the art to make or use the invention and not to limit the scope of the invention which is defined by the claims.

It should be understood that the foregoing description is only illustrative. Various alternatives and modifications can be devised by those skilled in the art. In addition, features from different embodiments described above could be selectively combined into a new embodiment. Accordingly, the description is intended to embrace all such alternatives, modifications, and variances which fall within the scope of the appended claims.

## Claims

1. A printable proton battery (100), comprising:
a cathode (110) comprising a printed film of a first material;
an anode (120) comprising a printed film of graphene oxide; and
an electrolyte (130) disposed between the cathode (110) and the anode (120), the electrolyte (130) comprising a printed film, the printed film comprising graphene oxide and a proton conductive material, wherein the proton conductive material of the electrolyte (130) comprises sulfonated tetrafluoroethylene-based fluoropolymer-copolymer (230), or derivatives of sulfonated tetrafluoroethylene-based fluoropolymer-copolymer (230), or a composition comprising pyridine or pyridine-related structures (330), or a composition based on a carbon ring with carboxyl groups (335) .

2. The printable battery (100) of claim 1, wherein the composition comprising pyridine or pyridine-related structures (330) comprises aminated 1,3,5-triazine (330).

3. The printable proton battery (100) of claims 1 or 2, wherein the first material comprises a noble metal selected from the group consisting of Au, Pt, Ag, Rh, and Pd, graphite, poly(3,4-ethylenedioxythiophene), a two-dimensional metal dichalcogenide, graphene flakes, a metal coordination complex, or combinations of the foregoing materials.

4. The printable proton battery (100) of claim 3, wherein the two-dimensional metal dichalcogenide comprises PtSe₂ or PtSe₂/graphene nanocomposite.

5. The printable proton battery (100) of claim 3, wherein the metal coordination complex comprises one or more metal ions selected from Cu²⁺, Pd²⁺, and Pt²⁺ combined with one or more of an imidazolidine, a pyrazine, and a pyridine.

6. The printable battery (100) of claim 3, wherein the metal coordination complex is formed from CuBr₂ with dipicolinic acid.

7. The printable proton battery (100) of claim 3, wherein the metal coordination complex is a Pt/imidazolidine complex.

8. The printable proton battery (100) of claim 3, wherein the metal coordination complex is based on a pyrazine and contains pyridine ligands.

9. The printable proton battery (100) of claim 3, wherein the metal coordination complex is benzonitrile-based or 4-ethynylpyridine-based.

10. The printable proton battery (100) of any of claims 1 through 9, wherein the anode (120) is reduced graphene oxide.

11. The printable proton battery of any of claims 1 through 10, wherein the anode (120) comprises a transition metal dichalcogenide.

## Patentansprüche

1. Druckbare Protonenbatterie (100), umfassend:
eine Kathode (110), die einen gedruckten Film aus einem ersten Material umfasst;
eine Anode (120), die einen gedruckten Film aus Graphenoxid umfasst; und
einen zwischen der Kathode (110) und der Anode (120) angeordneten Elektrolyt (130), wobei der Elektrolyt (130) einen gedruckten Film umfasst, wobei der gedruckte Film Graphenoxid und ein protonenleitendes Material umfasst, wobei das protonenleitende Material des Elektrolyts (130) sulfoniertes tetrafluorethylenbasiertes Fluorpolymer-Copolymer (230) oder Derivate von sulfoniertem tetrafluorethylenbasiertem Fluorpolymer-Copolymer (230) oder eine Zusammensetzung, die Pyridin oder mit Pyridin verwandte Strukturen (330) umfasst, oder eine Zusammensetzung auf Basis eines Kohlenstoffrings mit Carboxylgruppen (335) umfasst.

2. Druckbare Batterie (100) nach Anspruch 1, wobei die Zusammensetzung, die Pyridin oder mit Pyridin verwandte Strukturen (330) umfasst, aminiertes 1,3,5-Triazin (330) umfasst.

3. Druckbare Protonenbatterie (100) nach Anspruch 1 oder 2, wobei das erste Material ein Edelmetall aus der Gruppe bestehend aus Au, Pt, Ag, Rh und Pd, Graphit, Poly(3,4-ethylendioxythiophen), ein zweidimensionales Metalldichalcogenid, Graphenplättchen, einen Metallkoordinationskomplex oder Kombinationen der vorstehenden Materialien umfasst.

4. Druckbare Protonenbatterie (100) nach Anspruch 3, wobei das zweidimensionale Metalldichalcogenid PtSe₂ oder PtSe₂/Graphen-Nanokomposit umfasst.

5. Druckbare Protonenbatterie (100) nach Anspruch 3, wobei der Metallkoordinationskomplex ein oder mehrere Metallionen, die aus Cu²⁺, Pd²⁺ und Pt²⁺ ausgewählt sind, in Kombination mit einem Imidazolidin, einem Pyrazin und/oder einem Pyridin umfasst.

6. Druckbare Protonenbatterie (100) nach Anspruch 3, wobei der Metallkoordinationskomplex aus CuBr₂ mit Dipicolinsäure gebildet ist.

7. Druckbare Protonenbatterie (100) nach Anspruch 3, wobei es sich bei dem Metallkoordinationskomplex um einen Pt/Imidazolidin-Komplex handelt.

8. Druckbare Protonenbatterie (100) nach Anspruch 3, wobei der Metallkoordinationskomplex auf einem Pyrazin basiert und Pyridinliganden enthält.

9. Druckbare Protonenbatterie (100) nach Anspruch 3, wobei der Metallkoordinationskomplex auf Benzonitril basiert oder auf 4-Ethinylpyridin basiert.

10. Druckbare Protonenbatterie (100) nach einem der Ansprüche 1 bis 9, wobei es sich bei der Anode (120) um reduziertes Graphenoxid handelt.

11. Druckbare Protonenbatterie nach einem der Ansprüche 1 bis 10, wobei die Anode (120) ein Übergangsmetalldichalcogenid umfasst.

## Revendications

1. Batterie à protons imprimable (100), comprenant :
une cathode (110) comprenant un film imprimé d'un premier matériau ;
une anode (120) comprenant un film imprimé d'oxyde de graphène ; et
un électrolyte (130) disposé entre la cathode (110) et l'anode (120), l'électrolyte (130) comprenant un film imprimé, le film imprimé comprenant de l'oxyde de graphène et un matériau conducteur de protons, le matériau conducteur de protons de l'électrolyte (130) comprenant un copolymère de fluoropolymère à base de tétrafluoroéthylène sulfoné (230), ou des dérivés de copolymère de fluoropolymère à base de tétrafluoroéthylène sulfoné (230), ou une composition comprenant des structures de type pyridine ou de type apparenté à la pyridine (330), ou une composition à base d'un cycle carboné comportant des groupes carboxyle (335) .

2. Batterie imprimable (100) selon la revendication 1, la composition comprenant des structures de type pyridine ou de type apparenté à la pyridine (330) comprenant de la 1,3,5-triazine aminée (330).

3. Batterie à protons imprimable (100) selon la revendication 1 ou 2, le premier matériau comprenant un métal noble choisi dans le groupe constitué par Au, Pt, Ag, Rh, et Pd, le graphite, le poly(3,4-éthylènedioxythiophène), un dichalcogénure métallique à deux dimensions, des flocons de graphène, un complexe métallique de coordination, ou des combinaisons des matériaux précédents.

4. Batterie à protons imprimable (100) selon la revendication 3, le dichalcogénure métallique à deux dimensions comprenant du PtSe₂ ou un nanocomposite PtSe₂/graphène.

5. Batterie à protons imprimable (100) selon la revendication 3, le complexe métallique de coordination comprenant un ou plusieurs ions métalliques choisis parmi Cu²⁺, Pd²⁺, et Pt²⁺ combiné avec une ou plusieurs parmi une imidazolidine, une pyrazine, et une pyridine.

6. Batterie imprimable (100) selon la revendication 3, le complexe métallique de coordination étant formé à partir de CuBr₂ avec de l'acide dipicolinique.

7. Batterie à protons imprimable (100) selon la revendication 3, le complexe métallique de coordination étant un complexe Pt/imidazolidine.

8. Batterie à protons imprimable (100) selon la revendication 3, le complexe métallique de coordination étant à base d'une pyrazine et contenant des ligands pyridine.

9. Batterie à protons imprimable (100) selon la revendication 3, le complexe métallique de coordination étant à base de benzonitrile ou à base de 4-éthynylpyridine.

10. Batterie à protons imprimable (100) selon l'une quelconque des revendications 1 à 9, l'anode (120) étant de l'oxyde de graphène réduit.

11. Batterie à protons imprimable selon l'une quelconque des revendications 1 à 10, l'anode (120) comprenant un dichalcogénure de métal de transition.
